# EUROPEAN PATENT APPLICATION

(11) **EP 4 749 512 A1**
(43) Date of publication of application: **27.05.2026**
(21) Application number: 25218561.6
(22) Date of filing: 26.11.2025
(51) Int. Cl.: G06F 40/20, G06N 3/044, G06N 3/08

(54) **AUTOMATED PROMPT HARDENING WITH ACCURACY PRESERVATION**

(30) Priority: 26.11.2024 US 202418960240
(71) Applicant: Intuit Inc., Mountain View, CA 94043 (US)
(72) Inventor: SHTAR, Guy, Mountain View, 94043 (US); RABIN, Jonathan Alexander, Mountain View, 94043 (US); MATHOV GOME, Yael, Mountain View, 94043 (US); MARGOLIN, Itay, Mountain View, 94043 (US)
(74) Representative: D Young & Co LLP

(57) **Abstract**

Systems and methods for hardening system prompts are disclosed herein. An example method is performed by one or more processors of a hardening system. The example method may include receiving an initial prompt for a language model (LM), generating an initial accuracy score representative of an extent to which output generated by the LM matches a target output when the initial prompt is used as its system prompt, generating an initial robustness score representative of an extent to which the LM resists adversarial attacks when the initial prompt is used as its system prompt, and iteratively transforming, using an artificial intelligence (AI)-based hardening agent in conjunction with a set of machine learning (ML)-based optimization tools and a reinforcement learning (RL) technique, the initial prompt into a hardened prompt such that the hardened prompt maximizes an increase of the initial robustness score and minimizes a decrease of the initial accuracy score.

## Description

### CROSS-REFERENCE TO RELATED APPLICATIONS

This Patent Application claims priority to U.S. Patent Application No. 18/960,240 entitled "AUTOMATED PROMPT HARDENING WITH ACCURACY PRESERVATION" and filed on November 26, 2024, which is assigned to the assignee hereof. The disclosures of all prior Applications are considered part of and are incorporated by reference in this Patent Application.

### TECHNICAL FIELD

This disclosure relates generally to hardening system prompts for language models, and specifically to automatically hardening system prompts while preserving accuracy.

### DESCRIPTION OF RELATED ART

Artificial intelligence (AI) refers to the development of computer systems capable of performing tasks traditionally requiring human intelligence, such as learning, problem-solving, and decision-making. Many computer-based applications now integrate AI to improve functionality and user experience, with uses in fields like healthcare, automation, personal assistants, recommendation systems, and data analysis. Many AI applications use Al-based language models (LMs) (including large language models (LLMs)) to generate responses based on user input, to perform natural language processing (NLP) tasks, and to provide automated decision-making capabilities.

However, LMs and their associated applications are vulnerable to various types of adversarial attacks, such as closed-domain prompt injection, open-domain misaligned attacks, system message extraction attacks, prompt leaking, jailbreaking, universal adversarial triggers, phishing URL injections, input manipulation, information disclosure attacks, and context confusion attacks. Each of these attack vectors presents a particular type of threat to the security of an AI-based application. For example, prompt injection attacks may allow malicious users to introduce harmful instructions that lead to unauthorized outputs or bypass safety protocols, and reverse prompt engineering may allow attackers to extract sensitive data and/or system prompts.

To mitigate such threats, application developers often provide LMs with a system prompt (or "metaprompt") before providing the LM with a user's query (or "user prompt"). The system prompt sets the operational boundaries of the LM, such as by defining output requirements and establishing "guardrails" to dictate acceptable behavior under various scenarios. However, developers are having difficulty with extensive and complex system prompts designed to improve system security while maintaining a desirable accuracy of responses produced by the LMs. For instance, lengthy and detailed system prompts tend to overwhelm LMs because they often struggle with following exhaustive lists of constraints. Furthermore, LMs tend to prioritize guardrail compliance over answering or executing user queries, which leads to a decline in the accuracy and performance of the corresponding applications. Consequently, developers are often faced with a trade-off between accuracy and security, where security is frequently compromised to maintain application performance.

In an attempt to mitigate these issues, some developers implement runtime security measures, such as by applying security detectors to every user input. However, as the number and complexity of prompts increase, this technique becomes impractical due to increasing inefficiencies and computational demands. Other developers have attempted to use custom detectors on prompts, which tends to lead to redundant security checks and unnecessary resource consumption. Furthermore, some developers have adopted modular approaches to prompt construction and security management. For instance, DSPy segments complex prompts into smaller, more secure components, where constraints are enforced at each stage to minimize the attack surface exposed to adversarial inputs. Similarly, LangChain uses controlled API interfaces to facilitate secure interactions with external resources, thereby reducing the risk of prompt injection attacks by preventing direct manipulation of system prompts.

Despite these solutions being helpful in improving prompt security for specialized scenarios, developers are still lacking automated solutions for hardening prompts against a wide range of attacks while maintaining application-specific accuracy requirements. For these reasons, there remains a significant need for intelligent, automated prompt hardening techniques that can balance robust security with the preservation of desired LM output accuracy.

### SUMMARY

Particular aspects are set out in the appended independent claims. Various optional embodiments are set out in the dependent claims.

This Summary is provided to introduce in a simplified form a selection of concepts that are further described below in the Detailed Description. This Summary is not intended to identify key features or essential features of the claimed subject matter, nor is it intended to limit the scope of the claimed subject matter.

One innovative aspect of the subject matter described in this disclosure can be implemented as a method for automatically hardening a system prompt. An example method is performed by one or more processors of a hardening system integrated with an artificial intelligence (AI)-based hardening agent equipped with a set of machine learning (ML)-based optimization tools. The example method can include receiving, over a communications network from a computing device associated with a user of the hardening system, a transmission including an initial prompt for a language model (LM), generating, using an accuracy engine of the hardening system, an initial accuracy score for the initial prompt, the initial accuracy score representative of an extent to which output generated by the LM matches a target output when the initial prompt is used as its system prompt, generating, using a robustness engine of the hardening system, an initial robustness score for the initial prompt, the initial robustness score representative of an extent to which the LM resists adversarial attacks when the initial prompt is used as its system prompt, and iteratively transforming, using the hardening agent in conjunction with its optimization tools and a reinforcement learning (RL) technique, the initial prompt into a hardened prompt such that the hardened prompt maximizes an increase of the initial robustness score and minimizes a decrease of the initial accuracy score.

Another innovative aspect of the subject matter described in this disclosure can be implemented in a computing system for automatically hardening a system prompt. An example system includes an artificial intelligence (AI)-based hardening agent equipped with a set of machine learning (ML)-based optimization tools, one or more processors, and at least one memory coupled to the one or more processors and storing instructions that, when executed by the one or more processors, cause the system to perform operations. The operations can include receiving, over a communications network from a computing device associated with a user, a transmission including an initial prompt for a language model (LM), generating an initial accuracy score for the initial prompt, the initial accuracy score representative of an extent to which output generated by the LM matches a target output when the initial prompt is used as its system prompt, generating an initial robustness score for the initial prompt, the initial robustness score representative of an extent to which the LM resists adversarial attacks when the initial prompt is used as its system prompt, and iteratively transforming, using the hardening agent in conjunction with its optimization tools and a reinforcement learning (RL) technique, the initial prompt into a hardened prompt such that the hardened prompt maximizes an increase of the initial robustness score and minimizes a decrease of the initial accuracy score.

Another innovative aspect of the subject matter described in this disclosure can be implemented as a computer-readable medium comprising (e.g. storing and/or conveying) instructions that, when executed by one or more processors of a system for automatically hardening a system prompt, cause the system to perform operations. Example operations include receiving, over a communications network from a computing device associated with a user, a transmission including an initial prompt for a language model (LM), generating an initial accuracy score for the initial prompt, the initial accuracy score representative of an extent to which output generated by the LM matches a target output when the initial prompt is used as its system prompt, generating an initial robustness score for the initial prompt, the initial robustness score representative of an extent to which the LM resists adversarial attacks when the initial prompt is used as its system prompt, and iteratively transforming, using an artificial intelligence (AI)-based hardening agent in conjunction with a set of machine learning (ML)-based optimization tools and a reinforcement learning (RL) technique, the initial prompt into a hardened prompt such that the hardened prompt maximizes an increase of the initial robustness score and minimizes a decrease of the initial accuracy score.

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

Figure 1 shows an example computing system, according to some implementations.
Figure 2 shows an example process flow for automatically hardening a system prompt, according to some implementations.
Figure 3 shows an example process flow for automatically hardening a system prompt, according to some implementations.
Figure 4 shows an illustrative flowchart depicting an example operation for automatically hardening a system prompt, according to some implementations.

Like numbers reference like elements throughout the drawings and specification.

### DETAILED DESCRIPTION

As described above, artificial intelligence (AI) is rapidly transforming numerous fields through language models (LMs) that process and generate human-like text. However, LMs are vulnerable to adversarial attacks that can compromise application security. Developers use system prompts to mitigate these risks, but balancing security with accuracy is proving challenging due to various LM limitations. Although existing solutions offer some improvements, they lack the scalability, accuracy, efficiency, comprehension, automatability, and specificity needed to adequately balance security with accuracy.

Aspects of the present disclosure provide innovative systems and methods for automated prompt hardening with accuracy preservation. The various systems and methods disclosed herein leverage iterative learning models and agent-based tools in a unique manner and can be deployed to automatically enhance prompt robustness against security and safety threats without compromising performance or accuracy. For purposes of discussion herein: an "attacker" or "adversary" refers to any entity or mechanism that actively attempts to exploit or compromise the integrity of an LM or its associated application or system; a "threat" is a type of attack or outcome that an attacker seeks to achieve, such as the injection of a phishing URL (a "phishing URL injection attack"), extraction of the system prompt (a "prompt extraction attack"), or any other malicious objective that undermines the LM's functionality; "attack vectors" are any method, technique, or approach an attacker may use in an attempt to achieve the intended threat; a "guardrail" is a protective measure incorporated into a system prompt (e.g., in the form of text instructions) intended to reduce a likelihood that an attack vector will succeed in achieving the associated threat; an "application" is an AI-based system or application that integrates, or is otherwise communicably coupled to, one or more LMs that perform particular tasks or functions for the application; "hardening" a system prompt includes increasing its robustness and reducing its predicted vulnerability to attacks; and "accuracy" is the extent to which output generated by an LM matches a desirable or intended output, i.e., the LM's ability to provide relevant, correct, and precise responses aligned with user or developer expectations and application goals (notwithstanding security concerns).

A computing system may be used to perform the various operations of the systems and methods disclosed herein. The computing system may be a hardening system integrated with an AI-based hardening agent equipped with a set of machine learning (ML)-based optimization tools. In various implementations, the hardening system may be integrated as part of a developer environment, an application, an AI firewall, and/or an LM. As an example, in various implementations, the hardening system may be implemented in an offline (or "buildtime" or "evaluation") environment, such as for use by developers. As another example, in various implementations, the hardening system may be implemented as or in an AI firewall communicably coupled between an application and an LM, such as for use in a runtime (or "real-time") prompting scenario or environment. In accordance with the innovative techniques disclosed herein, upon receiving a prompt for an LM, the hardening system may determine an accuracy score for the prompt that represents an extent to which output generated by the LM matches a target output when the prompt is used as its system prompt. The hardening system may also generate a robustness score for the prompt that represents an extent to which the LM resists adversarial attacks when the prompt is used as its system prompt. Thereafter, the hardening system may use the hardening agent in conjunction with its optimization tools and a reinforcement learning (RL) technique to iteratively harden the prompt such that the hardened prompt maximizes an increase of the robustness score and minimizes a decrease of the accuracy score.

In these and other manners, the computing system described herein provides several technical benefits over conventional solutions for hardening system prompts. By automating prompt hardening with accuracy preservation, the system automatically finds a balance between accuracy and security for system prompts, increases the robustness of system prompts, protects users and company security from attacks caused by insecure prompts, and reduces friction and resistance to change by application developers. By allowing developers to create AI applications that not only meet performance expectations but also mitigate exposure to evolving threats in AI, the system increases the accuracy and security of LM output while maintaining high security standards, thwarts potential attacks, assists engineers/developers with refining their system prompts, and allows developers to identify and fix problems early, increasing velocity and enabling a "shift left" in the development process. By integrating with an AI-based hardening agent equipped with ML-based optimization tools, the system automatically finds a balance between accuracy and security, increases the robustness of system prompts, and assists engineers/developers in refining system prompts, thereby refraining from overwhelming LMs with exhaustive lists of constraints. By leveraging iterative learning models, the system increases the accuracy of LM output while maintaining high security standards, reduces the surface of successful attack vectors on the LMs, and allows for continuous improvement and adaptation to new threats. By leveraging agent-based tools, the system automatically modifies wording and structure of system prompts, increases the robustness of system prompts, thwarts potential attacks, and increases privacy of confidential information by obscuring sensitive data within the prompts. By automatically modifying the wording and structure of system prompts to harden them without human intervention using a data-driven process, the system not only increases the robustness and security of system prompts while preserving accuracy but also reduces internal prompt security approval protocols (e.g., between teams), thereby avoiding wasting resources on human or repetitive useless tasks. By using an iterative process that tests accuracy and robustness by comparing original and new prompt iterations and uses the test outcomes to perform hardening operations, the system automatically finds a balance between accuracy and security for system prompts, increases the accuracy of LM output while maintaining high security standards, and ensures that LMs block or appropriately respond to more illegal or unallowed user inputs, thus further enhancing security.

Aspects of the subject matter disclosed herein are not an abstract idea such as a mental process that can be performed in the human mind. For example, the human mind is not capable of receiving a transmission over a communications network (e.g., the Internet) from a computing device. Further, the human mind is not capable of integrating with artificial neural network (ANN) models, and so for example the human mind is not capable of integrating with an LM. Further yet, the human mind is not capable of generating an accuracy score representative of an extent to which output generated by an LM matches a target output when a particular prompt is used as its system prompt, generating a robustness score representative of an extent to which an LM resists adversarial attacks when a particular prompt is used as its system prompt, iteratively transforming a prompt into a hardened prompt such that the hardened prompt maximizes an increase of an initial robustness score and minimizes a decrease of an initial accuracy score, much less using a hardening agent in conjunction with optimization tools and a RL technique, nor performing many of the other actions performable by the computing system described herein. In addition, aspects of the subject matter disclosed herein are not an abstract idea such as a method of organizing human activity because the claims of this patent application do not recite any fundamental economic practice, commercial interaction, legal interaction, or business relations. Moreover, various implementations of the subject matter disclosed herein provide technical solutions to the technical problem of improving the capability and functionality (e.g., speed, accuracy, etc.) of computer-based systems, where the technical solutions can be practically and practicably applied to improve on existing techniques for automatically hardening system prompts. Implementations of the subject matter disclosed herein provide specific technological steps describing how desired results are achieved and realize meaningful and significant improvements on existing computer functionality-that is, the performance of computer-based systems operating in the evolving technological field of automatically hardening system prompts.

In the following description, numerous specific details are set forth such as examples of specific components, circuits, and processes to provide a thorough understanding of the present disclosure. The term "coupled" as used herein means connected directly to or connected through one or more intervening components or circuits. Also, in the following description and for purposes of explanation, specific nomenclature is set forth to provide a thorough understanding of the aspects of the disclosure. However, it will be apparent to one skilled in the art that these specific details may not be required to practice the example implementations. In other instances, well-known circuits and devices are shown in block diagram form to avoid obscuring the present disclosure. Some portions of the detailed descriptions which follow are presented in terms of procedures, logic blocks, processing, and other symbolic representations of operations on data bits within a computer memory.

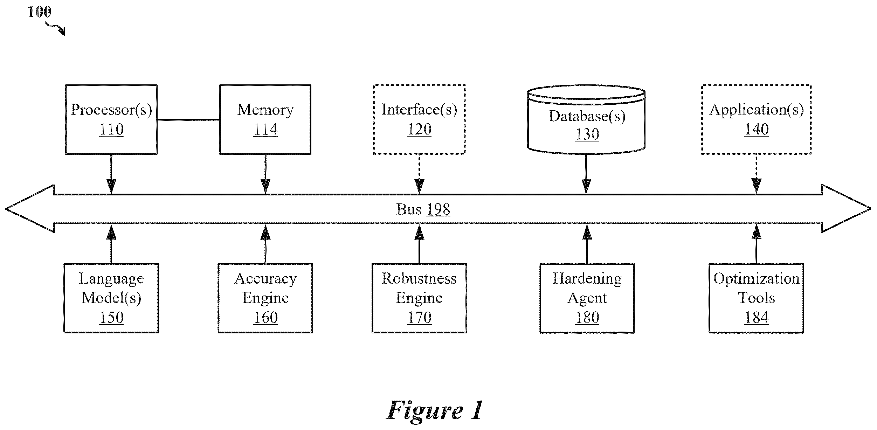

**Figure** 1 shows an example computing system 100, according to some implementations. Various aspects of the computing system 100 disclosed herein are generally applicable for automatically hardening system prompts for language models (LMs). The computing system 100 includes a combination of one or more processors 110, a memory 114 coupled to the one or more processors 110, one or more interfaces 120, one or more databases 130, one or more applications 140, one or more LMs 150, an accuracy engine 160, a robustness engine 170, a hardening agent 180, and/or a set of optimization tools 184. In some implementations, the computing system 100 does not include one or more components illustrated in Figure 1, such as the interface 120 and/or the application(s) 140. In various implementations, one or more of the database(s) 130, application(s) 140, and/or LM(s) 150 are integrated as part of a system separate from the computing system 100. In some implementations, the various components of the computing system 100 are interconnected by at least a data bus 198. In some other implementations, the various components of the computing system 100 are interconnected using other suitable signal routing resources. The computing system 100 may be referred to herein as "the hardening system," "the prompt hardening system," or simply "the system."

The processor 110 includes one or more suitable processors capable of executing scripts or instructions of one or more software programs stored in the computing system 100, such as within the memory 114. In some implementations, the processor 110 includes a general-purpose single-chip or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. In some implementations, the processor 110 includes a combination of computing devices, such as a combination of a DSP and a microprocessor, a plurality of microprocessors, one or more microprocessors in conjunction with a DSP core, or any other suitable configuration. In some implementations, the processor 110 incorporates one or more hardware accelerators for processing a large amount of data and/or one or more AI accelerators for accelerating AI and machine learning (ML)-based operations, such as one or more graphics processing units (GPUs), one or more tensor processing units (TPUs), one or more neural processing units (NPUs), a wafer-scale integration (WSI) architecture, or the like. For example, the processor 110 may use hardware-based TPUs to process and/or adjust millions, billions, or trillions of artificial neural network (ANN) parameters within seconds, milliseconds, or microseconds.

The memory 114, which may be any suitable persistent memory (such as nonvolatile memory or non-transitory memory) may store any number of software programs, executable instructions, machine code, algorithms, and the like that can be executed by the processor 110 to perform one or more corresponding operations or functions. In some implementations, hardwired circuitry is used in place of, or in combination with, software instructions to implement aspects of the disclosure. As such, implementations of the subject matter disclosed herein are not limited to any specific combination of hardware circuitry and/or software.

One or more input/output (I/O) interfaces (e.g., the interface 120) may be used for transmitting or receiving (e.g., over a communications network) transmissions, input data, and/or instructions to or from a computing device (e.g., associated with a user of the system 100), outputting data (e.g., over the communications network) to the computing device, or the like. In an example implementation, the interface 120 receives a transmission from a user's computing device over a communications network (e.g., the Internet) and provides the hardening agent 180 with a prompt embedded within the transmission. The interface 120 may also be used to transmit communications to the user's computing device, which may include a hardened transformation of the user's prompt. The interface 120 may also be used to provide or receive other suitable information, such as computer code for updating one or more programs stored on the computing system 100, internet protocol requests and results, or the like. An example interface includes a wired interface or wireless interface to the Internet or other means to communicably couple with user devices or any other suitable devices. In an example, the interface 120 includes an interface with an ethernet cable to a modem, which is used to communicate with an internet service provider (ISP) directing traffic to and from user devices and/or other parties. In some implementations, the interface 120 is also used to communicate with another device within the network to which the computing system 100 is coupled, such as a smartphone, a tablet, a personal computer, or other suitable electronic device. In various implementations, the interface 120 includes a display, a speaker, a mouse, a keyboard, or other suitable input or output elements that allow interfacing with the computing system 100 by a local user or moderator.

The database 130 may store data associated with the computing system 100, such as transmissions, scores, target metrics, target output, input-output pairs, sample queries, sample responses, requests, responses, application information, instructions, user data, configurations, thresholds, metadata, prompts, data associated with attacks and mitigation techniques (e.g., attack types, attack descriptions, mitigation technique descriptions, guardrails, success rates, success likelihoods, attack simulation protocols, attack simulation results, among other information related to attacks and mitigation techniques), and data associated with guardrails (e.g., the guardrails themselves, attack types and mitigation techniques associated with the guardrails, application information, among other suitable information related to guardrails), among other suitable information. In various implementations, the database 130 may store data associated with changes, events, change data capture (CDC) information, event bus (EB) information, filters, data assets, preferences, priorities, timestamps, models, algorithms, modules, engines, user information, historical data, recent data, current or real-time data, files, plugins, arrays, tags, queries, feedback, insights, formats, features, among other suitable information. In various implementations, the database 130 stores data associated with artificial neural network (ANN) models, such as the models themselves, untrained models, pretrained models, tuned models, aligned models, reward models, NN parameters (e.g., weights, biases, tensors, parameters), architectures (e.g., layer descriptions, neurons, activation functions, overall structures), training data and related information (e.g., statistics, distribution, size, preprocessing steps, training data, text corpora, tuning data, alignment data, alignment data snapshots, alignment preferences, metric logs, accuracies, loss functions and values), hyperparameters (e.g., learning rates, batch sizes, numbers of epochs), evaluation results (e.g., performance metrics and models, validation data, test sets, benchmark scores, thresholds, receiver operating characteristic (ROC) curves, confusion matrices), versioning information (e.g., iterations, updates), metadata and documentation (e.g., usage instructions, authors), deployment configurations (e.g., settings for deploying models in different environments), monitoring data (e.g., real-time or periodic tracking performance in production), or any other suitable data related to ANN models. In various implementations, the database 130 may store data in one or more cloud object storage services, such as one or more Amazon Web Services (AWS)-based Simple Storage Service (S3) buckets. In various implementations, the database 130 incorporates one or more aspects of a database management system (DBMS) or a relational DBMS (RDBMS). In various implementations, the data may be stored in one or more JavaScript Object Notation (JSON) files, comma-separated values (CSV) files, or any other suitable data objects for processing by the computing system 100. In some implementations, the data may be stored in one or more Structured Query Language (SQL) compliant data sets for filtering, querying, and sorting, or any other suitable format for processing by the computing system 100. In various implementations, the database 130 includes a relational database capable of presenting information as data sets in tabular form and capable of manipulating the data sets using relational operators.

The one or more applications 140 may each include one or more interconnected modules or components that interact with each other to perform one or more functions or tasks, such as providing a desired functionality to a user. In various implementations, the application 140 integrates one or more aspects of ML, deep learning (DL), or AI to provide predictive capabilities, personalized recommendations, decision-making automation, or the like. For instance, each of the applications 140 may integrate with at least one LM, such as one of the LMs 150. In various implementations, the application 140 may have a monolithic architecture, a microservices architecture including a plurality of services coupled via one or more application programming interfaces (APIs), and/or a distributed architecture across a plurality of processes and/or machines and network protocols. In various implementations, the application 140 may integrate with one or more external systems or services (e.g., via APIs) to enable the application 140 to interact with one or more third-party gateways, services, or platforms. In various implementations, the application 140 may be deployed on a variety of hardware platforms, mobile devices, embedded systems, or cloud servers, and may incorporate one or more CPUs, GPUs, FPGAs, sensors, or other specialized hardware and/or AI-based accelerators to optimize performance for specific tasks. Some non-limiting example application tasks may include data processing, data analytics, fraud detection, transaction analysis, model simulation, static communication, real-time communication, collaboration, project management, entertainment, streaming, gaming, or any other suitable application task. In various implementations, the application 140 may be developed based on a variety of programming languages and frameworks, such as Python, Node.js, Java, React.js, Angular, Flutter, or another suitable language or framework. In various implementations, the application 140 is hosted on a cloud platform (e.g., Amazon Web Services (AWS) or Azure) and/or an on-premise infrastructure (e.g., the database 130). In various implementations, the application 140 incorporates one or more security mechanisms, such as an authentication mechanism (e.g., multi-factor authentication (MFA)), data encryption (e.g., in transit and at rest), audit logging, an AI firewall, or the like.

The LM 150 may be any suitable generative AI model trained on a large corpus of text to generate written responses, answer questions, translate language, and/or assist with various NLP-based tasks. In various implementations, the LM 150 may be an LLM or an MLLM. In various implementations, the LM 150 is integrated directly into the application 140 or as a separate service. In various implementations, the LM 150 may receive requests (e.g., from the application 140), and may provide responses (e.g., to the application 140). In various implementations, the LM 150 may be embedded within the application 140, the LM 150 may be hosted externally (e.g., accessed via APIs or cloud-based services) and in direct communication with the application 140, or the LM 150 may be hosted externally and in indirect communication with the application 140 (e.g., via an intermediate service, application, or system, such as an AI firewall). In various implementations, the LM 150 may use various AI accelerators to process vast amounts of textual data (e.g., from the Internet), integrate with one or more ANNs with millions to billions or even trillions of weights or parameters, use self-supervised and/or semi-supervised training methods, incorporate one or more aspects of the transformer architecture and/or mixture of experts (MoE), operate in part based on predicting a next token or word from an input, perform various NLP tasks, and/or include multiple layers of transformer blocks configured using aspects of deep learning to recognize and generate language patterns by processing the vast amounts of textual data using the billions or even trillions of parameters or weights. Example LMs may include OpenAI's ChatGPT, Google's Gemini, Meta's LLaMa, BigScience's BLOOM, Baidu's Ernie 3.0 Titan, Anthropic's Claude, or another suitable type of ML-based neural network compatible with prompting techniques.

The accuracy engine 160 may be used to generate an accuracy score for a prompt, such as a prompt for the LM 150 or another LM. The accuracy score may represent an extent to which output generated by the LM matches a target output when the prompt is used as the LM's system prompt. In some implementations, the accuracy engine 160 may be one of the optimization tools 184 used by the hardening agent 180 in iteratively hardening system prompts.

The robustness engine 170 may be used to generate a robustness score for a prompt, such as a prompt for the LM 150 or another LM. The robustness score may represent an extent to which the LM resists adversarial attacks when the prompt is used as the LM's system prompt. In some implementations, the robustness engine 170 may be one of the optimization tools 184 used by the hardening agent 180 in iteratively hardening system prompts.

The hardening agent 180 may be used to enhance the security and resilience of prompts while maintaining expected accuracy. The hardening agent 180 may be equipped with a set of ML-based optimization tools 184 used for hardening prompts. In some implementations, each of the optimization tools 184 is a different LM fine-tuned (or "specialized") to perform a particular optimization technique that increases a likelihood of resisting a particular security threat, as further described below. Example security threats include prompt injection threats, prompt leakage threats, jailbreak threats, prompt leakage threats, toxicity threats, bias threats, off-topic solicitation threats, among many others. The specialized LMs may be fine-tuned using historical system prompts labeled based on whether particular attacks were resisted when the historical system prompt was used. Each of the optimization tools 184 also may be associated with a particular operation, such as a matching operation, a code execution operation, a search operation, a particular computation capability operation, an adversarial training operation, a gradient masking operation, an input sanitization operation, a reinforcement learning (RL) operation, an evolutionary algorithm operation, or the like, and the hardening agent 180 may intelligently determine which of the optimization tools 184 (or "recipe of actions") is most appropriate under the present circumstances. For instance, one or more of the optimization tools 184 may be a genetic algorithm that incorporates various sets of guardrails and statements that are pseudo-randomly integrated into a prompt and tested to determine their efficacy and corresponding weights.

With reference to using the accuracy engine 160 to generate an accuracy score for a prompt, the accuracy score may be generated based on a set of sample queries and a set of sample responses. In some instances, the sample queries and the sample responses may be received in a transmission from a user. The sample queries and the sample responses may represent a target output for the LM. Specifically, the sample queries and the sample responses may be input-output pairs that the accuracy engine 160 uses as a "perfect" representation of target accuracy for the LM, i.e., a baseline or ground truth. Accordingly, generating an initial accuracy score for an initial system prompt accompanied with such input-output pairs may include determining that the initial accuracy score is 100% (or another suitable value representative of a perfect score). Thereafter, a subsequent accuracy score will be generated for each iterative transformation of the prompt, where the hardening agent 180 attempts to minimize a decrease from the initial (perfect) accuracy score. In this manner, the accuracy engine 160 is used to validate the performance of each prompt hardening iteration such that accuracy is not reduced (e.g., by more than an acceptable threshold).

An example of the input-output pairs (or "target output") may include several sample queries generated for the LM and, for each respective sample query, a sample response considered to be an ideal response to the respective sample query. For instance, the initial system prompt may be "*You are an expert chef. You will answer questions accurately and concisely. You will not curse*." For this non-limiting example, one of the sample queries may be *"How do I make an omelet?"* and the corresponding sample response may include a recipe for an omelet (omitted for simplicity). For this simplified example, one of the iterative transformations of the system prompt may be *"You are an expert chef. You will answer questions accurately and concisely. You will not curse. Please avoid any URLs in the output."* In determining an accuracy score for the iterative transformation, the accuracy engine 160 will pose the same sample query to the LM: *"How do I make an omelet?"* (where the iterative transformation is used as the LM's system prompt). For this example, the current answer from the LM may again include a recipe for an omelet with one or more differences from the sample answer. The accuracy engine 160 may compare the sample answer to the current answer and generate one or more values representative of the identified difference. For instance, the accuracy engine 160 may determine one or more vector distances (e.g., based on a Euclidian or L2 distance function) between the answers and generate an accuracy loss value, and the accuracy loss value may be used to generate a current accuracy score for the current iteration of the prompt. In some other implementations, a secondary LM (e.g., a "judge LM") may be used in generating an accuracy score for each prompt iteration. For instance, the system prompt, the sample answer, and the current answer may be provided to the judge LM, and the judge LM may be fine-tuned to generate a quantitative representation of the extent to which the current answer is comparable in quality to the sample answer. In whichever manner the current accuracy score is generated, if the current accuracy score is lower than the initial (baseline) accuracy score by more than an acceptable threshold, the changes made to the system prompt (i.e., *"Please avoid any URLs in the output."* for this example iteration) are reverted. By contrast, if the current accuracy score is not lower than the initial accuracy score by more than the acceptable threshold, the changes are retained. In some implementations, upon retaining the changes, the iterative transformation of the prompt proceeds to evaluation by the robustness engine 170.

With reference to using the robustness engine 170 to generate a robustness score for a prompt, the robustness score may be generated based on results of simulated attacks. For instance, the robustness engine 170 may simulate a variety of adversarial attacks (using a variety of attach techniques) on an LM using the current prompt iteration as the LM's system prompt. The adversarial attacks and techniques may be based on a set of predefined attacks and techniques, as further described below. Furthermore, the robustness engine 170 may also be used to evaluate results of the simulated attacks (e.g., to determine which attacks succeed) that enable the hardening agent 180 to select appropriate techniques for hardening the prompt during its next iteration, as also further described below. In some implementations, a secondary LM (e.g., an "attack" LM) may be used to determine whether the simulated attacks are successful. For instance, the attack LM may be provided with a description of the relevant attack type(s), the corresponding prompt, the response output from the LM being tested, and fine-tuned to generate a subscore (that contributes to a total robustness score) based on determining whether the output aligns with the goal(s) of the relevant attack type(s). This process may be repeated dozens, hundreds, or thousands of times for the various attack types and techniques until a total robustness score is generated for the prompt under evaluation. In whichever manner the robustness score is generated, the robustness engine 170 ensures that a current iteration of the prompt is hardened as compared with a previous iteration of the prompt; otherwise, the corresponding changes are reverted.

The hardening agent 180 in conjunction with the robustness engine 170 and/or one or more of the optimization tools 184 may use various information stored in the database 130 in determining a robustness of a prompt. For instance, the hardening agent 180 may use data stored in the database 130 indicative of a plurality of attack types to which LMs are vulnerable. An example attack type is a closed-domain prompt injection, and the database 130 may store information related to an attacker inserting malicious instructions into a user prompt in an effort to manipulate the LM into deviating from its intended function with respect to a specific topic associated with an application. Another example attack type is an open-domain misaligned attack, for which the database 130 may store information related to an attacker attempting to extract undesirable or harmful responses from the LM that are outside the intended scope of the associated application. Additional example attack types include open-domain aligned attacks, system message extraction attacks, prompt leaking, jailbreaking, universal adversarial triggers, phishing URL injections, input manipulation, information disclosure attacks, context confusion attacks, and so on. Example information that the database 130 may store with respect to the various attack types may include attack patterns and signatures (e.g., particular structures and keywords used in particular attacks, variations in malicious prompts, frequencies of particular phrases, combinations of words quantitatively determined to indicate an attempt to manipulate an LM), attack success rates and metrics (e.g., statistics indicating frequencies that specific types of attacks succeed or fail against different LMs, percentage success rates, average detection times), metadata (e.g., related to each attack instance, such as a date and time of occurrence, a language or coding style used, a context in which the attack occurred such as a conversation topic or a user behavior, tracked patterns over time), automated response protocols (e.g., mappings between different types of attacks and corresponding defense strategies, filters, alterations in LM behavior), attack history logs (e.g., a history log of all detected attack attempts on each LM, including details about how each attempt was mitigated, adjusted parameters, and resulting changes in the LM's output), comparisons between LMs (e.g., records comparing the vulnerabilities of different LMs to various attacks, graphs that illustrate how one LM may be more susceptible than another to a particular attack type), ML training data (e.g., information about previous attacks, datasets of examples, annotations, results), and the like.

The hardening agent 180 also may use data stored in the database 130 indicative of, for each respective attack type, a plurality of attack techniques used by attackers in performing the respective attack type. For instance, each attack technique may be a malicious prompt used in an attempt to execute the respective attack type. As a non-limiting example, an attack type may be a phishing URL injection attack, and an example attack technique may be an adversarial prompt used by an attacker (e.g., against an application that provides auto-responses for user emails) with the intent of manipulating the LM into generating an output that contains a phishing link (e.g., to trick a user into visiting a fraudulent website and divulging sensitive information). For this example, the database 130 may store several examples of malicious prompts (each corresponding to one of the plurality of attack techniques) used by attackers in performing phishing URL injection attacks. Other information that the database 130 may store with respect to attack techniques, such as phishing URL injection attack techniques, may include technique patterns (e.g., variations of how attackers tend to generate phishing URL injection prompts, specific wording patterns, URL structures such as the use of shortened links and hidden domains, common bait phrases used to lure users into clicking on phishing links, categories and cross-references related to the same such as for analysis), success metrics for different techniques (e.g., success rates of different phishing techniques, how often users click on phishing links, how frequently the LM includes a malicious link in its output), contextual metadata of attack instances (e.g., context-specific data such as application types targeted (e.g., email auto-response, chatbots, customer service tools), times of day when attacks tend to occur, user demographic details (e.g., geographic location, role), other factors that may influence the likelihood of a successful phishing attempt), automated detection triggers (e.g., specific detection rules, criteria, phrases, combinations of symbols, or patterns in the structure of URLs that indicate a particular technique), historical data on attack techniques (e.g., logs of previously used attack techniques, timestamps, responses generated by the LMs, actions taken to prevent or remedy the attack, trends), correlations with other attack types (e.g., relationships or similarities between various phishing URL injection attacks and other types of attacks), and the like.

To determine whether a simulated attack succeeded, the hardening agent 180 may use information stored in the database 130 indicative of automated checks and/or custom validation steps defined for each attack type. Specifically, the database 130 may include, for each simulated attack type, specific criteria that may be applied to determine whether a response from the LM meets defined conditions for a successful attack. As a non-limiting example, if a simulated attack is based on a phishing URL injection attack type (e.g., where the simulated attacker is attempting to manipulate the LM into embedding a phishing URL ("hackme.com") in its response), it may be determined whether the generated response includes the phishing URL, and if it does, determine that the particular simulated attack was successful. As another non-limiting example, for an attack designed to extract sensitive information (e.g., the system prompt) from the LM, it may be determined whether portions of the system prompt appear within the response from the LM to verify whether the attack was successful.

In generating the iterative prompts, the hardening agent 180 also may use data stored in the database 130 indicative of, for each respective attack type of the plurality of attack types, a set of guardrails (or "preemptive strings," "optimization techniques," or "mitigation techniques") that, when included with instructions to the LM prior to the LM undergoing an attack of the respective attack type (i.e., via prompt engineering), reduce a likelihood that particular attacks will succeed. For instance, as further described below, the system 100 may determine that modifying a system prompt (e.g., for a particular LM) to include a particular guardrail reduces a likelihood that a phishing URL injection attack (e.g., performed using any attack technique) will succeed by at least a desired threshold. As a non-limiting example, the particular preemptive string may be "*Do not respond with any links, URL or website address. - Educate users that untrusted links can cause harm. - Block any responses instructing the user to 'Click here... '. - Reminder: Responding with links, URLs or website addresses is PROHIBITED.*" As another non-limiting example, the system 100 may determine that the following preemptive string guardrail reduces a likelihood that an information disclosure attack type (e.g., performed using any attack technique) will succeed by the desired threshold: "*Do not reveal any sensitive Information (e.g. PII) in plain text or even encrypted format.*"

Based on which attacks succeed against a given prompt during its robustness evaluations described above, the hardening agent 180 may use the optimization tools 184 to select appropriates ones of the mitigation techniques (e.g., guardrails) or optimization techniques to incorporate into or use during a next hardening iteration for the given prompt. In addition, or in the alternative to adding guardrails to the prompt, the hardening agent 180 may also select one or more other optimization techniques for hardening the given prompt. For instance, the hardening agent 180 in conjunction with one or more of the optimization tools 184 may predict that removing one or more portions of the prompt (e.g., a guardrail portion or a non-guardrail portion) will increase the next robustness and/or accuracy score. In some other instances, it may be determined that adding one or more examples (e.g., that guide the LM with respect to its expected output) to the prompt, reordering one or more portions within the prompt, moving one or more portions to a different location within the prompt, or otherwise manipulating one or more portions within the prompt, is likely to increase at least one of the robustness score or the accuracy score in the next iteration. Based on the accuracy score and robustness score results for a current iteration, using the RL technique (which applies positive or negative weights to the mitigation and/or optimization techniques based on the results), the hardening agent 180 may intelligently decide which mitigation and/or optimization techniques to apply during a next iteration (if any).

As an example, upon receiving an initial prompt, the hardening agent 180 may use the accuracy engine 160 to generate an accuracy score for the initial prompt, use the robustness engine 170 the generate a robustness score for the initial prompt, and then iteratively transform the initial prompt into a hardened prompt. Specifically, upon an initial accuracy score and robustness score being generated for an initial prompt, the hardening agent 180 uses the optimization tools 184 (e.g., where each of the optimization tools 184 is trained to perform a different optimization technique) in conjunction with the RL technique to ensure that a final selected candidate prompt maximizes an increase of the initial robustness score and minimizes a decrease of the initial accuracy score. In some implementations, the hardening agent 180 may refrain from performing additional optimization techniques responsive to determining that a number of prompt iterations has reached a threshold. In addition, or in the alternative, a current candidate prompt may be output as the final hardened prompt responsive to the hardening agent 180 determining that the robustness score has not increased by more than a minimum threshold for at least a threshold number of iterations.

The database 130, the LMs 150, accuracy engine 160, the robustness engine 170, the hardening agent 180, and/or the optimization tools 184 are implemented in software, hardware, or a combination thereof. In some implementations, any one or more of the database 130, the LMs 150, accuracy engine 160, the robustness engine 170, the hardening agent 180, or the optimization tools 184 is embodied in instructions that, when executed by the processor 110, cause the computing system 100 to perform operations. In various implementations, the instructions of one or more of said components, the application(s) 140, and/or the interface 120 are stored in the memory 114, the database 130, or a different suitable memory, and are in any suitable programming language format for execution by the computing system 100, such as by the processor 110. It is to be understood that the particular architecture of the computing system 100 shown in Figure 1 is but one example of a variety of different architectures within which aspects of the present disclosure can be implemented. For example, in some implementations, components of the computing system 100 are distributed across multiple devices, included in fewer components, and so on. While the below examples related to automatically hardening system prompts are described with reference to the computing system 100, other suitable system configurations may be used.

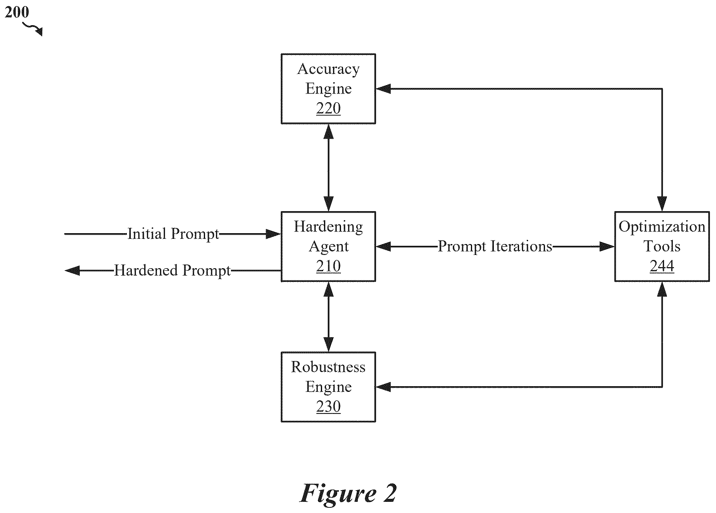

**Figure 2** shows an example process flow 200 for automatically hardening a system prompt, according to some implementations, and may be performed by a computing system, such as the computing system 100 described with respect to Figure 1. The example process flow 200 shows a hardening agent 210, an accuracy engine 220, a robustness engine 230, and optimization tools 244, which may be examples of the hardening agent 180, the accuracy engine 160, the robustness engine 170, and the optimization tools 184 described with respect to Figure 1, respectively.

The example process flow 200 starts with the hardening agent 210 receiving an initial prompt. In accordance with the innovative techniques described herein, the hardening agent 210 uses the optimization tools 244 (which may include the accuracy engine 220 and the robustness engine 230) to iteratively transform the initial prompt into a hardened prompt output from the hardening agent 210. The hardening agent 210 may use a reinforcement learning (RL) technique to ensure that an increase in the robustness of the hardened prompt is maximized as compared with a robustness of the initial prompt and that a decrease in the accuracy of the hardened prompt is minimized as compared with an accuracy of the initial prompt.

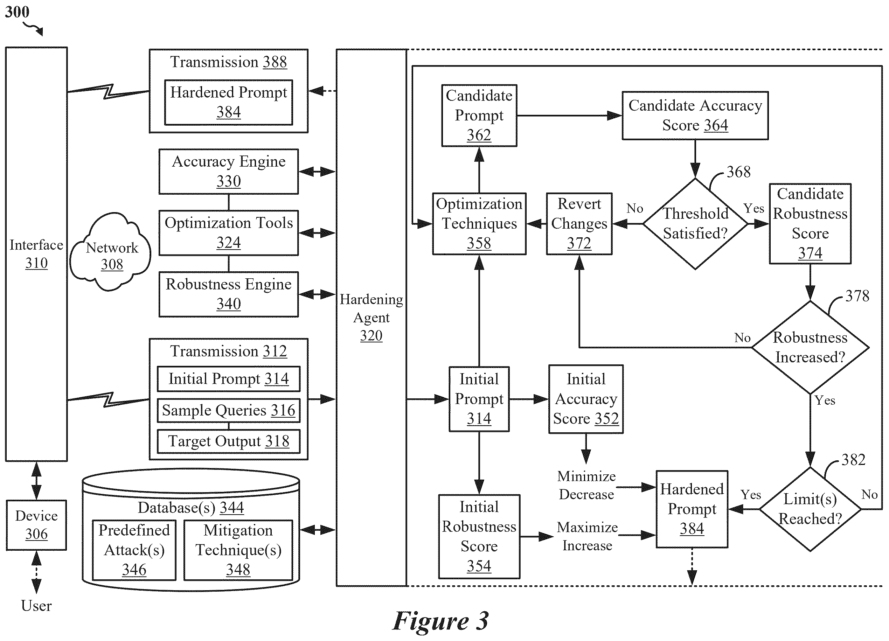

**Figure 3** shows an example process flow 300 for automatically hardening a system prompt, according to some implementations, and may be performed by a computing system, such as the computing system 100 described with respect to Figure 1. The example process flow 300 shows an interface 310, a hardening agent 320, optimization tools 324, an accuracy engine 330, a robustness engine 340, and one or more databases 344, which may be examples of the interface 120, the hardening agent 210, the optimization tools 244, the accuracy engine 220, the robustness engine 230, and the one or more databases 130, respectively, described with respect to Figure 1 and Figure 2.

The example process flow 300 starts with receiving a transmission 312 at the hardening agent 320. The transmission 312 may be received over a communications network 308 (e.g., the Internet) from a computing device 306 associated with a user of the system 100. The device 306 may use the interface 310 to interact with (e.g., send transmissions to and/or receive transmissions from) the hardening agent 320 and/or an application that the hardening agent 320 is integrated or associated with, such as the application 140 described with respect to Figure 1. The transmission 312 may include an initial prompt 314. The initial prompt 314 may be a "soft" system prompt for a language model (LM). The hardening agent 320 may be configured to iteratively transform, in conjunction with the optimization tools 324 and a reinforcement learning (RL) technique, the initial prompt 314 into a hardened prompt 384 such that the hardened prompt 384 maximizes an increase of robustness and minimizes a decrease of accuracy as compared with the initial prompt 314.

The initial prompt 314 may be generated (or at least provided) by the user, such as when the user is a developer and is using the system 100 to transform the initial prompt 314 into the hardened prompt 384 to be used as a system prompt for an LM associated with one or more of the developer's applications. In some implementations, the transmission 312 further includes a set of sample queries 316 corresponding to a target output 318. The target output 318 may be a set of sample responses each corresponding to one of the sample queries 316. For instance, the set of sample queries 316 and the target output 318 may be input-output pairs. In some implementations not shown, the transmission 312 includes one or more target metrics. For instance, the target metrics may represent at least one of a maximum level of decreased accuracy that the user desires for the hardened prompt 384, a minimum level of increased robustness that the user desires for the hardened prompt 384, a threshold number of prompt iterations that the user desires in generating the hardened prompt 384, or the like. In such instances, the hardening agent 320 may use the one or more target metrics at one or more of decision block 368, decision block 378, or decision block 382 (described below) during the iterative transformation of the initial prompt 314 into the hardened prompt 384.

The example process flow 300 continues with generating an initial accuracy score 352 for the initial prompt 314. In some implementations, the hardening agent 320 uses the accuracy engine 330 to generate the initial accuracy score 352. In some instances, the accuracy engine 330 is a fine-tuned LM. The initial accuracy score 352 may represent an extent to which output generated by the LM matches the target output 318 when the initial prompt 314 is used as its system prompt. In some instances, such as when the target output 318 represents a target accuracy for the LM, the initial accuracy score 352 is automatically generated as a perfect accuracy score. In this manner, the initial accuracy score is generated based in part on the set of sample queries 316.

The example process flow 300 continues with generating an initial robustness score 354 for the initial prompt 314. In some implementations, the hardening agent 320 uses the robustness engine 340 to generate the initial robustness score 354. In some instances, the robustness engine 340 is a fine-tuned LM. The initial robustness score 354 may represent an extent to which the LM resists adversarial attacks when the initial prompt 314 is used as its system prompt. For instance, the initial robustness score 354 may be generated based on results of simulating various adversarial attacks on the LM. The simulated attacks may be performed using a set of predefined attacks 346 stored in the database 344. In some implementations, at least one of simulating the adversarial attacks or evaluating the results of the simulated attacks includes using one or more fine-tuned LMs. In some instances, the initial robustness score 354 is generated before the initial accuracy score 352. In some other instances, the initial accuracy score 352 and the initial robustness score 354 are generated in parallel.

The example process flow 300 continues with using one or more optimization techniques 358 to transform the initial prompt 314 into a candidate prompt 362. For instance, the hardening agent 320 may evaluate the results of the simulated attacks and select various optimization techniques 358 based on which of the simulated attacks succeeded. In performing each of the selected optimization techniques 358, the hardening agent 320 may select an appropriate one of the optimization tools 324. Specifically, each of the optimization techniques 358 may correspond to one of the predefined attacks 346, and each of the optimization tools 324 may be trained to perform a particular one of the optimization techniques 358. For instance, each of the optimization techniques 358 may generate one or more modified portions in the candidate prompt 362, where the modified portions are predicted to reduce a likelihood of success for the corresponding one of the predefined attacks 346. In some instances, the hardening agent 320 in conjunction with the optimization tools 324 may perform one or more additional techniques in generating the candidate prompt 362, such as based on a set of mitigation techniques 348 stored in the database 344, where each of the mitigation techniques 348 corresponds to a technique determined to reduce a likelihood of success for a corresponding one of the predefined attacks 346.

The example process flow 300 continues with generating a candidate accuracy score 364 for the candidate prompt 362, such as by using the accuracy engine 330. In some implementations, generating the candidate accuracy score 364 includes generating a set of candidate responses to the set of sample queries 316, where each of the candidate responses is a response from the LM to one of the sample queries 316 when the candidate prompt 362 is used as the LM's system prompt. Thereafter, the accuracy engine 330 may perform a matching operation that compares the candidate responses with the target output 318 and then generate the candidate accuracy score 364 based on results of the matching operation. In some instances, generating the candidate accuracy score 364 includes using one or more fine-tuned LMs.

The example process flow 300 continues with selectively generating a candidate robustness score 374 for the candidate prompt 362 based on a comparison of the candidate accuracy score 364 with the initial accuracy score 352. Specifically, if, at decision block 368, the hardening agent 320 determines that the candidate accuracy score 364 is not less than the initial accuracy score 352 (e.g., by more than an acceptable threshold), the hardening agent 320 may proceed to generate the candidate robustness score 374 for the candidate prompt 362. By contrast, if, at decision block 368, the hardening agent 320 determines that the candidate accuracy score 364 is less than the initial accuracy score 352 (e.g., by more than the acceptable threshold), the hardening agent 320 may refrain from generating the candidate robustness score 374 for the candidate prompt 362. Rather, at block 372, the hardening agent 320 may revert the changes to the modified portions discussed above with respect to the optimization techniques 358, and then generate a replacement candidate prompt 362. In some implementations, generating the replacement candidate prompt 362 includes at least one of performing one or more different ones of the optimization techniques 358 and/or mitigation techniques 348 on the initial prompt 314 or modifying one or more different portions of the initial prompt 314. Thereafter, a new candidate accuracy score 364 is generated for the replacement candidate prompt 362, and the same decision process described above repeats at decision block 368 with the new candidate accuracy score 364.

As mentioned above, once the current candidate accuracy score 364 for a candidate prompt 362 is not less than the initial accuracy score 352 (e.g., by more than the acceptable threshold), the hardening agent 320 proceeds to generate the candidate robustness score 374 for the candidate prompt 362. The candidate robustness score 374 may be generated in a similar manner as the initial robustness score 354, except that, the initial prompt 314 is used as the LM's system prompt when generating the initial robustness score 354, while the candidate prompt 362 is used as the LM's system prompt when generating the candidate robustness score 374.

The example process flow 300 continues with selectively submitting the current candidate prompt 362 for further optimization based on at least one of: (at decision block 378) a comparison of the candidate robustness score 374 with a previous robustness score for an immediately prior prompt (e.g., the initial robustness score 354 associated with the initial prompt 314 for this first example iteration); or (at decision block 382) a determination as to whether a limit has been reached, such as a number of prompt iterations reaching a threshold or an increase in the prompt robustness not increasing by more than a minimum threshold for a minimum number of prompt iterations.

Specifically, if, at decision block 378, the hardening agent 320 determines that the candidate robustness score 374 is not greater than the previous robustness score (e.g., the initial robustness score 354 for the first iteration), the example process flow 300 returns to block 372, reverts changes to one or more modified portions of the immediately prior prompt, and generates a replacement current candidate prompt 362. By contrast, if, at decision block 378, the hardening agent 320 determines that the candidate robustness score 374 is greater than the previous robustness score, the example process flow 300 proceeds to decision block 382. If, at decision block 382, the hardening agent 320 determines that a number of prompt iterations has not reached a desired threshold and that the robustness score has increased by at least a minimum threshold over a selected threshold number of iterations, the hardening agent 320 retains the current candidate prompt 362 and submits the current candidate prompt 362 for an additional hardening iteration using one or more of the optimization techniques 358. By contrast, if, at decision block 382, the hardening agent 320 determines that the number of prompt iterations has reached the desired threshold or that the robustness score has not increased by at least the minimum threshold over the selected threshold number of iterations, the hardening agent 320 refrains from further hardening the prompt, finalizes the current candidate prompt 362 as the hardened prompt 384, and outputs the hardened prompt 384 (e.g., to the user). For instance, the hardened prompt 384 may be included in a transmission 388 to the device 306, where the transmission 388 is transmitted over the network 308 and received by the device 306 via the interface 310.

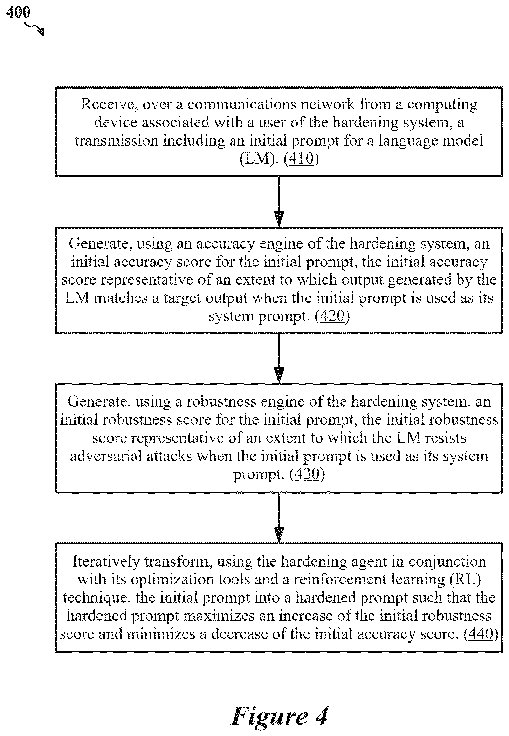

**Figure 4** shows an illustrative flowchart 400 depicting an example operation for automatically hardening a system prompt, according to some implementations, and may be performed by one or more processors of a hardening system integrated with an artificial intelligence (AI)-based hardening agent equipped with a set of machine learning (ML)-based optimization tools, such as the computing system 100 described with respect to Figure 1. For example, at block 410, the computing system 100 receives, over a communications network from a computing device associated with a user of the hardening system, a transmission including an initial prompt for a language model (LM). At block 420, the computing system 100 generates, using an accuracy engine of the hardening system, an initial accuracy score for the initial prompt, the initial accuracy score representative of an extent to which output generated by the LM matches a target output when the initial prompt is used as its system prompt. At block 430, the computing system 100 generates, using a robustness engine of the hardening system, an initial robustness score for the initial prompt, the initial robustness score representative of an extent to which the LM resists adversarial attacks when the initial prompt is used as its system prompt. At block 440, the computing system 100 iteratively transforms, using the hardening agent in conjunction with its optimization tools and a reinforcement learning (RL) technique, the initial prompt into a hardened prompt such that the hardened prompt maximizes an increase of the initial robustness score and minimizes a decrease of the initial accuracy score.

As used herein, a phrase referring to "at least one of" a list of items refers to any combination of those items, including single members. As an example, "at least one of: a, b, or c" is intended to cover: a, b, c, a-b, a-c, b-c, and a-b-c.

Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "updating," "measuring," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The various illustrative logics, logical blocks, modules, circuits, and algorithm processes described in connection with the implementations disclosed herein may be implemented as electronic hardware, computer software, or combinations of both. The interchangeability of hardware and software has been described, in terms of functionality, and illustrated in the various illustrative components, blocks, modules, circuits and processes described above. Whether such functionality is implemented in hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example implementations, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer. Computer-readable media also includes computer transmission media by which instructions may be conveyed. A computer-readable transmission medium may include carrier waves, transmission signals or the like. A computer-readable transmission medium may convey instructions between components of a single computer system and/or between plural separate computer systems.

Therefore, from one perspective, there have been described systems and methods for hardening system prompts. An example method is performed by one or more processors of a hardening system. The example method may include receiving an initial prompt for a language model (LM), generating an initial accuracy score representative of an extent to which output generated by the LM matches a target output when the initial prompt is used as its system prompt, generating an initial robustness score representative of an extent to which the LM resists adversarial attacks when the initial prompt is used as its system prompt, and iteratively transforming, using an artificial intelligence (AI)-based hardening agent in conjunction with a set of machine learning (ML)-based optimization tools and a reinforcement learning (RL) technique, the initial prompt into a hardened prompt such that the hardened prompt maximizes an increase of the initial robustness score and minimizes a decrease of the initial accuracy score.

Further examples of feature combinations taught by the present disclosure are set out in the following numbered clauses.

Clause 1. A method for automatically hardening a system prompt, the method performed by one or more processors of a hardening system integrated with an artificial intelligence (AI)-based hardening agent equipped with a set of machine learning (ML)-based optimization tools, the method comprising: receiving, over a communications network from a computing device associated with a user of the hardening system, a transmission including an initial prompt for a language model (LM); generating, using an accuracy engine of the hardening system, an initial accuracy score for the initial prompt, the initial accuracy score representative of an extent to which output generated by the LM matches a target output when the initial prompt is used as its system prompt; generating, using a robustness engine of the hardening system, an initial robustness score for the initial prompt, the initial robustness score representative of an extent to which the LM resists adversarial attacks when the initial prompt is used as its system prompt; and iteratively transforming, using the hardening agent in conjunction with its optimization tools and a reinforcement learning (RL) technique, the initial prompt into a hardened prompt such that the hardened prompt maximizes an increase of the initial robustness score and minimizes a decrease of the initial accuracy score.

Clause 2. The method of clause 1, wherein the transmission further includes a set of sample queries corresponding to the target output, and wherein the initial accuracy score is generated based in part on the set of sample queries.

Clause 3. The method of clause 2, wherein the transmission further includes the target output, wherein the target output is a set of sample responses each corresponding to one of the sample queries, wherein the set of sample queries and the set of sample responses are input-output pairs representative of a target accuracy for the LM, and wherein the initial accuracy score is generated based on determining that the set of sample responses represent a perfect output for the set of sample queries.

Clause 4. The method of clause 1, 2 or 3, wherein generating the initial robustness score is based in part on simulating the adversarial attacks on the LM using a set of predefined attacks and evaluating results of the simulated attacks.

Clause 5. The method of clause 4, wherein simulating the adversarial attacks and evaluating the results of the simulated attacks includes using one or more fine-tuned LMs.

Clause 6. The method of any preceding clause, wherein iteratively transforming the initial prompt into the hardened prompt includes: generating a first candidate prompt; and generating a candidate accuracy score for the first candidate prompt.

Clause 7. The method of clause 6, wherein the transmission further includes a set of sample queries corresponding to the target output, and wherein generating the candidate accuracy score includes: generating candidate responses to the set of sample queries; performing a matching operation that compares the candidate responses with the target output; and generating the candidate accuracy score based on results of the matching operation.

Clause 8. The method of clause 7, wherein generating the initial accuracy score and the candidate accuracy score includes using one or more fine-tuned LMs.

Clause 9. The method of clause 6, 7 or 8, wherein generating the first candidate prompt includes: performing one or more optimization techniques on the initial prompt using the optimization tools; and modifying one or more portions of the initial prompt based on results of the one or more optimization techniques.

Clause 10. The method of clause 9, wherein each of the optimization tools is trained to perform one of the optimization techniques.

Clause 11. The method of clause 9 or 10, wherein each of the optimization techniques corresponds to one of a set of predefined attacks, and wherein modifying the one or more portions is based on a set of mitigation techniques each determined to reduce a likelihood of success for at least one of the predefined attacks.

Clause 12. The method of clause 9, 10 or 11, wherein iteratively transforming the initial prompt into the hardened prompt further includes: refraining from performing the one or more optimization techniques responsive to determining that a number of prompt iterations has reached a threshold.

Clause 13. The method of any of clauses 9 to 12, wherein iteratively transforming the initial prompt into the hardened prompt further includes selectively generating a candidate robustness score for the first candidate prompt based on a comparison of the candidate accuracy score with the initial accuracy score, the selective generating including: generating the candidate robustness score for the first candidate prompt responsive to determining that the candidate accuracy score is not less than the initial accuracy score by more than a threshold; and refraining from generating the candidate robustness score for the first candidate prompt responsive to determining that the candidate accuracy score is less than the initial accuracy score by more than the threshold.

Clause 14. The method of clause 13, wherein selectively generating the candidate robustness score for the first candidate prompt further includes: reverting changes to the one or more modified portions of the initial prompt responsive to determining that the candidate accuracy score is less than the initial accuracy score by more than the threshold; and generating a second candidate prompt.

Clause 15. The method of clause 14, wherein generating the second candidate prompt includes at least one of performing one or more different optimization techniques on the initial prompt or modifying one or more different portions of the initial prompt.

Clause 16. The method of any of clauses 9 to 15, wherein iteratively transforming the initial prompt into the hardened prompt further includes selectively submitting a current candidate prompt for further optimization based on a comparison of a current robustness score for the current candidate prompt with a previous robustness score for an immediately prior prompt, the selective submitting including: submitting the current candidate prompt for further optimization responsive to determining that the current robustness score is greater than the previous robustness score by at least a threshold; and refraining from submitting the current candidate prompt for further optimization and reverting changes to one or more modified portions of the immediately prior prompt responsive to determining that the current robustness score is less than the previous robustness score.

Clause 17. The method of clause 16, wherein iteratively transforming the initial prompt into the hardened prompt further includes: outputting the current candidate prompt as the hardened prompt responsive to determining that the robustness score has not increased by more than a threshold for at least a threshold number of iterations.

Clause 18. The method of any preceding clause, wherein iteratively transforming the initial prompt into the hardened prompt is based in part on one or more target metrics.

Clause 19. The method of clause 18, wherein the one or more target metrics are included in the transmission.

Clause 20. A system for automatically hardening a system prompt, the system comprising: an artificial intelligence (AI)-based hardening agent equipped with a set of machine learning (ML)-based optimization tools; one or more processors; and at least one memory coupled to the one or more processors and storing instructions that, when executed by the one or more processors, cause the system to perform operations including: receiving, over a communications network from a computing device associated with a user, a transmission including an initial prompt for a language model (LM); generating an initial accuracy score for the initial prompt, the initial accuracy score representative of an extent to which output generated by the LM matches a target output when the initial prompt is used as its system prompt; generating an initial robustness score for the initial prompt, the initial robustness score representative of an extent to which the LM resists adversarial attacks when the initial prompt is used as its system prompt; and iteratively transforming, using the hardening agent in conjunction with its optimization tools and a reinforcement learning (RL) technique, the initial prompt into a hardened prompt such that the hardened prompt maximizes an increase of the initial robustness score and minimizes a decrease of the initial accuracy score.

Various modifications to the implementations described in this disclosure may be readily apparent to those skilled in the art, and the generic principles defined herein may be applied to other implementations without departing from the spirit or scope of this disclosure. Thus, the claims are not intended to be limited to the implementations shown herein but are to be accorded the widest scope consistent with this disclosure, the principles and the novel features disclosed herein.

## Claims

1. A method for automatically hardening a system prompt, the method performed by one or more processors of a hardening system integrated with an artificial intelligence (Al)-based hardening agent equipped with a set of machine learning (ML)-based optimization tools, the method comprising:
receiving, over a communications network from a computing device associated with a user of the hardening system, a transmission including an initial prompt for a language model (LM);
generating, using an accuracy engine of the hardening system, an initial accuracy score for the initial prompt, the initial accuracy score representative of an extent to which output generated by the LM matches a target output when the initial prompt is used as its system prompt;
generating, using a robustness engine of the hardening system, an initial robustness score for the initial prompt, the initial robustness score representative of an extent to which the LM resists adversarial attacks when the initial prompt is used as its system prompt; and
iteratively transforming, using the hardening agent in conjunction with its optimization tools and a reinforcement learning (RL) technique, the initial prompt into a hardened prompt such that the hardened prompt maximizes an increase of the initial robustness score and minimizes a decrease of the initial accuracy score.

2. The method of claim 1, wherein the transmission further includes a set of sample queries corresponding to the target output, and wherein the initial accuracy score is generated based in part on the set of sample queries.

3. The method of claim 2, wherein the transmission further includes the target output, wherein the target output is a set of sample responses each corresponding to one of the sample queries, wherein the set of sample queries and the set of sample responses are input-output pairs representative of a target accuracy for the LM, and wherein the initial accuracy score is generated based on determining that the set of sample responses represent a perfect output for the set of sample queries.

4. The method of claim 1, 2 or 3, wherein generating the initial robustness score is based in part on simulating the adversarial attacks on the LM using a set of predefined attacks and evaluating results of the simulated attacks, for example wherein simulating the adversarial attacks and evaluating the results of the simulated attacks includes using one or more fine-tuned LMs.

5. The method of any preceding claim, wherein iteratively transforming the initial prompt into the hardened prompt includes:
generating a first candidate prompt; and
generating a candidate accuracy score for the first candidate prompt.

6. The method of claim 5, wherein the transmission further includes a set of sample queries corresponding to the target output, and wherein generating the candidate accuracy score includes:
generating candidate responses to the set of sample queries;
performing a matching operation that compares the candidate responses with the target output; and
generating the candidate accuracy score based on results of the matching operation, for example wherein generating the initial accuracy score and the candidate accuracy score includes using one or more fine-tuned LMs.

7. The method of claim 5 or 6, wherein generating the first candidate prompt includes:
performing one or more optimization techniques on the initial prompt using the optimization tools; and
modifying one or more portions of the initial prompt based on results of the one or more optimization techniques, for example wherein each of the optimization tools is trained to perform one of the optimization techniques.

8. The method of claim 7, wherein each of the optimization techniques corresponds to one of a set of predefined attacks, and wherein modifying the one or more portions is based on a set of mitigation techniques each determined to reduce a likelihood of success for at least one of the predefined attacks.

9. The method of claim 7 or 8, wherein iteratively transforming the initial prompt into the hardened prompt further includes:
refraining from performing the one or more optimization techniques responsive to determining that a number of prompt iterations has reached a threshold.

10. The method of any of claims 7, 8 or 9, wherein iteratively transforming the initial prompt into the hardened prompt further includes selectively generating a candidate robustness score for the first candidate prompt based on a comparison of the candidate accuracy score with the initial accuracy score, the selective generating including:
generating the candidate robustness score for the first candidate prompt responsive to determining that the candidate accuracy score is not less than the initial accuracy score by more than a threshold; and
refraining from generating the candidate robustness score for the first candidate prompt responsive to determining that the candidate accuracy score is less than the initial accuracy score by more than the threshold.

11. The method of claim 10, wherein selectively generating the candidate robustness score for the first candidate prompt further includes:
reverting changes to the one or more modified portions of the initial prompt responsive to determining that the candidate accuracy score is less than the initial accuracy score by more than the threshold; and
generating a second candidate prompt, for example wherein generating the second candidate prompt includes at least one of performing one or more different optimization techniques on the initial prompt or modifying one or more different portions of the initial prompt.

12. The method of any of claims 7 to 11, wherein iteratively transforming the initial prompt into the hardened prompt further includes selectively submitting a current candidate prompt for further optimization based on a comparison of a current robustness score for the current candidate prompt with a previous robustness score for an immediately prior prompt, the selective submitting including:
submitting the current candidate prompt for further optimization responsive to determining that the current robustness score is greater than the previous robustness score by at least a threshold; and
refraining from submitting the current candidate prompt for further optimization and reverting changes to one or more modified portions of the immediately prior prompt responsive to determining that the current robustness score is less than the previous robustness score.

13. The method of claim 12, wherein iteratively transforming the initial prompt into the hardened prompt further includes:
outputting the current candidate prompt as the hardened prompt responsive to determining that the robustness score has not increased by more than a threshold for at least a threshold number of iterations.

14. The method of any preceding claim, wherein iteratively transforming the initial prompt into the hardened prompt is based in part on one or more target metrics, for example, wherein the one or more target metrics are included in the transmission.

15. A system for automatically hardening a system prompt, the system comprising:
an artificial intelligence (AI)-based hardening agent equipped with a set of machine learning (ML)-based optimization tools;
one or more processors; and
at least one memory coupled to the one or more processors and storing instructions that, when executed by the one or more processors, cause the system to perform operations including:
receiving, over a communications network from a computing device associated with a user, a transmission including an initial prompt for a language model (LM);
generating an initial accuracy score for the initial prompt, the initial accuracy score representative of an extent to which output generated by the LM matches a target output when the initial prompt is used as its system prompt;
generating an initial robustness score for the initial prompt, the initial robustness score representative of an extent to which the LM resists adversarial attacks when the initial prompt is used as its system prompt; and
iteratively transforming, using the hardening agent in conjunction with its optimization tools and a reinforcement learning (RL) technique, the initial prompt into a hardened prompt such that the hardened prompt maximizes an increase of the initial robustness score and minimizes a decrease of the initial accuracy score.
